# EUROPEAN PATENT SPECIFICATION

(11) **EP 0 610 924 B1**
(45) Date of publication and mention of the grant of the patent: **10.10.2001**
(21) Application number: 94102005.9
(22) Date of filing: 09.02.1994
(51) Int. Cl.: G02F 1/1337, G02F 1/1335

(54) **Multi-domain type liquid crystal display**
Flüssigkristall-Anzeige mit vielfachdomänen Struktur
Dispositif d'affichage à cristal liquide avec structure à multi-domaines

(30) Priority: 10.02.1993 JP 2249993; 10.02.1993 JP 2250093; 24.11.1993 JP 29345693; 24.11.1993 JP 29345793
(43) Date of publication of application: 17.08.1994
(73) Proprietor: Stanley Electric Co., Ltd., Meguro-ku Tokyo 153 (JP)
(72) Inventor: Toko, Yasuo, c/o Stanley Electric Co., Ltd., Yokohama-shi, Kanagawa (JP); Sugiyama, Takashi, Yokohama-shi, Kanagawa (JP)
(74) Representative: Wagner, Karl H., Dipl.-Ing.

(56) References cited:
- EP-A- 0 367 616
- EP-A- 0 497 619
- EP-A- 0 589 264
- JOURNAL OF APPLIED PHYSICS, vol.74, no.3, 1 August 1993, NEW YORK US pages 2071 - 2075 Y.TOKO ET AL. 'AMO0RPHOUS TWISTED NEMATIC-LIQUID-CRYSTAL DISPLAYS FABRICATED BY NONRUBBING SHOWING WIDE AND UNIFORM VIEWING-ANGLE CHARACTERISTICS ACCOMPANYING EXCELLENT VOLTAGE HOLDING RATIOS'

## Description

### BACKGROUND OF THE INVENTION

### Field of the Invention

This invention relates to a liquid crystal display and a manufacturing method thereof, and more particularly to a liquid crystal display and a manufacturing method thereof capable of improving the visual angle.

### Description of the Related Art

In a liquid crystal display or a liquid crystal cell, the orientation of liquid crystal molecules is changed from one particular state to other different state by some external action. The change in the optical property caused by the change of orientation of the liquid crystal molecules is utilized as a visual change in a display. Usually, the external action is application of an electric field. For orientating liquid crystal molecules in a particular state in the absence of an electric field, the surfaces of the glass substrates which sandwich a liquid crystal layer are usually subjected to orientation treatment.

In conventional liquid crystal cell of twisted nematic (TN) type. the orientation treatment is achieved by rubbing the glass substrates, which sandwich a liquid crystal layer, with a cloth or the Like in one direction, i.e. so-called rubbing treatment.

A pair of substrates are assembled in such a way that the rubbing directions of the upper and lower substrates are orthogonal to each other. A liquid crystal cell filled with liquid crystal material is sandwiched between a pair of linear polarizers. When the liquid crystal cell is of negative display type, parallel polarizers are disposed, interposing the liquid crystal cell, in such a way that one of the rubbing directions is parallel to the polarization axis of the neighboring polarizer. In the case of positive display, crossed polarizers are disposed, interposing the liquid crystal cell, in such a way that the polarization axes are parallel to the rubbing direction of the neighboring substrate.

When orientation treatment is done by rubbing as stated above, orientated direction of the liquid crystal molecules become uniform on the substrate surface. Then, there occurs angular dependency of the display that when the display is viewed by an observer, there exists a particular angular range in which the display can not be easily observed.

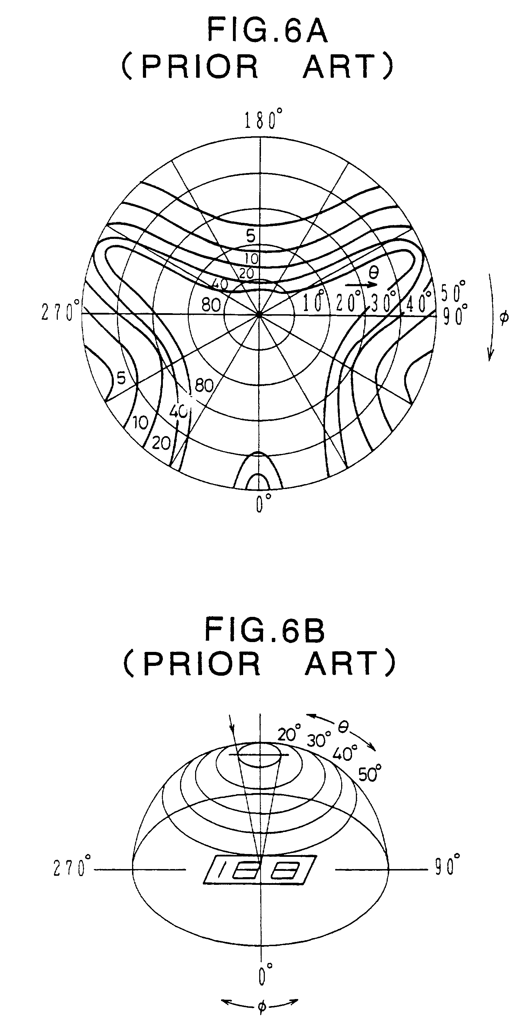

Fig.6A shows an example of equi-contrast curves representing the visual angle characteristics of a TN type liquid crystal cell. In Fig.6A, the normal direction to the liquid crystal cell is taken as θ = 0, and the polar angle θ from the normal, is shown radially with θ = 0 at the center. The direction in the horizontal plane (substrate surface) is represented by the azimuthal angle φ. These definitions are shown in Fig.6B.

In Fig.6A, each thick solid curve represents an equi-contrast curve. A contrast ratio (CR) value is attached to each curve. It can be seen in Fig.6A, that the visual angle region with high contrast ratio is restricted in particular angular ranges. Therefore, such a liquid crystal cell has visual angle dependency that the cell is easily seen from particular directions but is not so easily seen from other directions.

When a liquid crystal cell having such visual angle dependency is utilized in a display, the contrast is extremely reduced at some angle with respect to the display surface (in case of Fig.6A around φ = 180 degrees). In more extreme case, the black and white of display can be reversed.

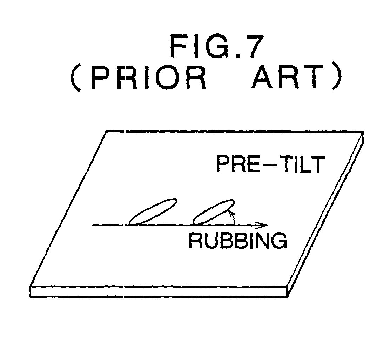

The visual angle dependency as shown in Fig.6A can be ascribed to the pre-tilt of liquid crystal molecules due to rubbing, as illustrated in Fig.7. The direction of pre-tilt of liquid crystal molecules coincides with the vector direction of rubbing.

When a voltage is applied to a liquid crystal cell, liquid crystal molecules begin to stand up along the pre-tilt direction of liquid crystal molecules. When the display is viewed from that direction, the polarization rotation is easily dissolved. Therefore, the terminating direction of the vector is the direction of easy observation.

Further, rubbing the substrate may generate electrostatic charge by friction, which may cause dielectric breakdown of the orientation film, and hence a display defect by insufficient orientation of liquid crystal molecules thereat. Further, in a liquid crystal cell employing active matrix (AM) drive, rubbing a substrate, which has thin film transistors (TFT) or other drive elements and wirings formed thereon, may cause breakage of elements or wirings by the electrostatic charge caused by rubbing. In the case of simple matrix display, the electrostatic charge caused by rubbing may break thin wirings.

Yet further, when an orientation film is formed on a substrate and rubbing treatment is done thereon, a great amount of fine particles is generated. Those particles may stick to the substrate by electrostatic force and may become cause of inaccurate gap of the liquid crystal cell and/or of display defects such as black points and white points.

Further, attention is drawn to EP-A-0 497 619 which shows a liquid crystal display device equipped with a liquid crystal cell formed by disposing a pair of transparent substrates each having a drive electrode and an alignment layer formed and laminated thereon so as to oppose each other with a small space therebetween, and charging and sealing liquid crystal into the space. In said space, the liquid crystal molecules are orientated in a twisted state along the vertical axis of the substrate surfaces and the orientation of the liquid crystal molecules inside a plane, which is parallel to the substrate surface and is spaced apart by an arbitrary distance from the substrate are irregular inside this plane.

### SUMMARY OF THE INVENTION

An object of this invention is to provide a liquid crystal display capable of improving the visual angle characteristics and providing high contrast ratio in all the directions.

Another object of this invention is to provide a liquid crystal display capable of solving the problems arising from the rubbing treatment.

Further object of this invention is to provide a method of manufacturing a liquid crystal display capable of improving the visual angle characteristics and providing high contrast ratio in all the directions.

Another object of this invention is to provide a method of manufacturing a liquid crystal display capable of solving the problems arising from rubbing treatment.

In order to achieve the above, a liquid crystal display as set forth in claims 1 and 9 and a method of manufacturing a liquid cristal display as set forth in claim 11 are provided. Preferred embodiments are claimed in the dependent claims.

According to an aspect of this invention, there is provided a liquid crystal display comprising a pair of transparent substrates, each having no uniform orientation direction; a liquid crystal layer formed of chiral nematic liquid crystal or nematic liquid crystal and sandwiched between said pair of transparent substrates, the liquid crystal layer having, in the absence of an electric field, orientation directions of liquid crystal molecules distributed along effectively all the directions with respect to directions in the plane of the substrates at equal possibility macroscopically; an optical compensation member disposed outside said pair of transparent substrates, having a negative and effectively uniaxial optical anisotropy with an optic axis directed substantially normal to said substrates; and a pair of polarizers disposed outside said pair of transparent substrates and said optical compensation member.

The substrate having no uniform orientation direction can be made without rubbing treatment. No rubbing treatment enables solving various problems arising from the rubbing treatment.

The orientation direction of the liquid crystal molecules change randomly in the plane of the liquid crystal display as a whole. A chiral mematic liquid crystal layer rotates the polarization axes of an incident light beam by a predetermined angle as a whole. By using a pair of linear polarizers, positive display, etc can be realized.

Further, by disposing the optical compensation member having a negative uniaxial optical anisotropy with an optic axis directed along the thickness direction, between the pair of substrates and the pair of polarizers, the directional dependency of the contrast ratio can be reduced. The optical compensation member may either be formed of one optical compensation plate or a combination of two or more optical compensation plates. When the optical compensation member is formed of a pair of optical compensation plates, it is preferable to dispose a pair of optical compensation plates, each having a positive uniaxial optical anisotropy and an optic axis in the plane of the plate, in such a manner that the optical axes are approximately orthogonal to each other. and are oblique to the polarization axes of the polarizers.

### BRIEF DESCRIPTION OF THE DRAWINGS

Figs.1A to 1F illustrate a liquid crystal display according to an embodiment of this invention, wherein Fig.1A is a schematic cross sectional view of the display, Fig.1B is a graph showing equi-contrast ratio curves, Fig.1C is a cross sectional view of an example of substrate structure, Fig.1D is a perspective view of a substrate structure, Fig.1E is a schematic plan view of a matrix type display, and Fig.1F is a schematic plan view of a polarization memory type liquid crystal display.

Figs.2A and 2B illustrate a liquid crystal display according to another embodiment of this invention, wherein Fig.2A is a schematic cross sectional view of a liquid crystal display, and Fig.2B is a graph showing equi-contrast ratio curves.

Figs.3A and 3B show a comparison example in which the relationship between optical compensation plates and the polarizer plates in the structure of Fig.2A is changed, wherein Fig.3A is a graph of equi-contrast ratio curves, and Fig.3B is an illustration showing relation between polarization axes and optic axes.

Figs.4A to 4C are illustrations of multi-domain structures.

Figs.5A to 5C illustrate a liquid crystal display according to the prior work, wherein Fig.5A is a schematic cross sectional view of a liquid crystal display, Fig.5B is an illustration of chiral pitch of a chiral nematic liquid crystal, and Fig.5C is a graph showing an example of equi-contrast curves.

Figs.6A and 6B illustrate prior art, wherein Fig.6A is a graph showing equi-contrast ratio curves according to the prior art, and Fig.6b is an illustration showing definitions at angles θ and φ.

Fig.7 is an illustration showing relation of rubbing and pre-tilt.

### DESCRIPTION OF THE PREFERRED EMBODIMENTS

Before the description of the embodiments of this invention, prior work by the inventors and their colleague will first be described. Japanese Patent application 4-236652 (EP 0 589 264). proposed a liquid crystal display which does not need any rubbing and can uniformalize the visual angle dependency.

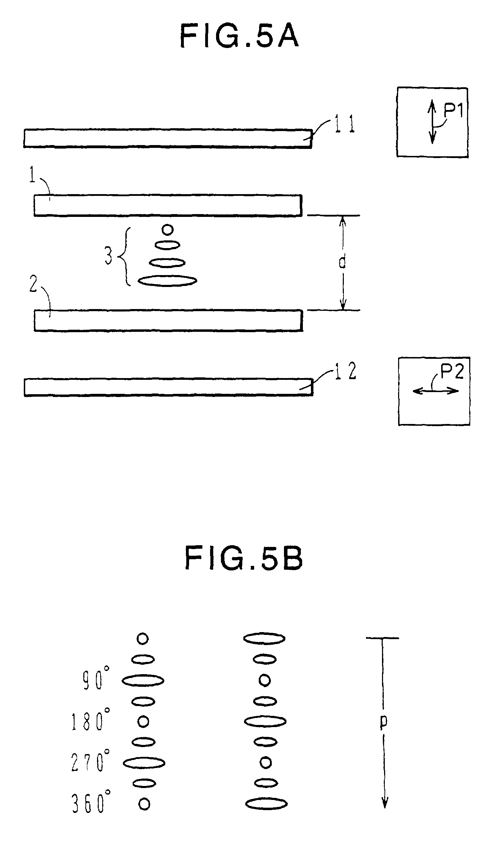

A liquid crystal display according to this prior work will be described referring to Figs.5A to 5C.

Fig.5A is a schematic cross sectional view of a liquid crystal display. Between a pair of transparent glass substrates 1 and 2, a chiral nematic liquid crystal 3 is sandwiched. The chiral nematic liquid crystal 3 is formed of liquid crystal molecules of elongated shape having dielectric anisotropy. A pair of linear polarizer plates 11 and 12 are disposed outside the transparent glass substrates 1 and 2.

This liquid crystal display can be manufactured by utilizing only the conventional processes. Here, however, no rubbing is done. Even when no positive orientation treatment such as rubbing is performed, it is considered that in a minute region on one substrate surface, liquid crystal molecules are at least approximately parallelly orientated along a certain direction. Here pre-tilt may or may not exist.

It can be easily expected that in a liquid crystal cell having no orientation force, a liquid crystal layer will take a multi-domain structure, considering the fact that a liquid crystal in a bulk state (a state where no external orientation force is given) will take a multi-domain. Especially, when the liquid crystal is injected into a liquid crystal cell while keeping the liquid crystal at a temperature equal to or higher than N-I point, the tendency of taking a multi-domain structure becomes stronger, where N represents (nematic) liquid crystal phase and I represent isotropic phase. The size of the respective micro domains in a multi-domain will also become uniform when the liquid crystal is injected in an isotropic phase.

When seeing a more wide region as a whole, a multiplicity of these minute regions (micro domains) exist. The orientation directions in these micro domains are not restricted to any direction. It can be considered that the orientation directions exist in all the directions in the plane of the substrate at the same possibility.

That is to say, it can be approximated that considering a cell as a whole, the orientation directions of the liquid crystal molecules at the interface with the substrate are directed to all the directions, but that considering each minute domain, they are directed to a certain direction.

A chiral nematic liquid crystal shows 360 degrees rotation of the orientation direction of the liquid crystal molecule at a thickness p (chiral pitch) as shown in Fig.5B. It is assumed here that the liquid crystal layer 3 in Fig.5A has a thickness d. Liquid crystal molecules show gradual rotation of longitudinal axis in a horizontal plane as the position departs from one substrate surface. On the other substrate surface, the rotation of liquid crystal molecules reach to a degree defined by d/p. In this way, a chiral nematic liquid crystal takes a twist structure in each micro domain. In the case of nematic liquid crystal, p = ∞.

Similar twist structure will be established in each of the micro domains in a multi-domain structure. Therefore, on the opposite substrate surface, a similar multi-domain orientation will be established, in which the orientation direction in each micro domain is rotated by the above-mentioned twist angle.

For example, in the case of d/p = 0.25, such a configuration will be realized, in which liquid crystal molecules show a 90° twist between the two substrates in each domain. Here, seeing a multi-domain including a multiplicity of micro domains as a whole, the orientation of liquid crystal molecules at the interface are directed to all the directions.

Polarization axes of the polarizer plates 11 and 12 disposed outside the liquid crystal cell are arranged in mutually orthogonal relation in a positive display and in mutually parallel relation in a negative display. In a conventional twisted nematic liquid crystal display, the direction of the polarization axis of the polarizer plate Is uniquely determined by the orientation direction of the liquid crystal molecules. In a liquid crystal display having no orientation structure, since the orientation directions of the liquid crystal molecules in a liquid crystal display as a whole are random (equal possibility in every direction), and there is no need to align the orientation direction and the polarization axis of the linear polarizer.

In the case of d/p = 0.25, in such micro domains, among the multi-domain, that have orientation directions of the liquid crystal molecules at the interface parallel or perpendicular to the polarization direction of the incident polarized light, the polarization direction of the output polarized light will be twisted by 90° by the polarization rotating function of the liquid crystal layer similar to a conventional twisted nematic (TN) display.

In other micro-domains which have orientation directions of the liquid crystal molecules not parallel nor perpendicular to the polarization direction of the incident polarized light, the twist angle of the output light is determined by the polarization rotating function and retardation Δn · d (where Δn is the anisotropy of the refractive index of the liquid crystal layer), and the twist angle has a wavelength dependency.

Therefore, those lights transmitted through the multi-domain and the polarizer plates are colored. Since the orientation directions in the multi-domain are directed to all the directions at an equal possibility, however, the wavelength dependency of the transmitted lights are substantially cancelled as a whole. In the positive display, a colorless transparent state is expected to be realized in the OFF state.

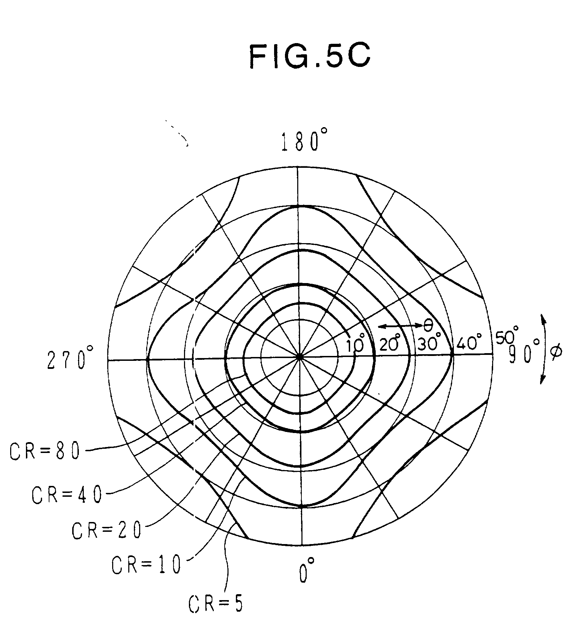

Fig.5C show the visual angle characteristics of a liquid crystal display manufactured according to the above-described process. In the manufacture, a usual liquid crystal for use in TFT liquid crystal display having a birefringence of the refractive index having a difference in the refractive index Δn = 0.093 and a phase transition temperature (N-I point) between the nenatic liquid crystal phase and isotropic phase T_{NI} = 98°C was used and sealed in a test cell having a gap 5.5 *µ*m and provided with transparent electrodes (indium tin oxide ITO films).

No orientation film was formed. The liquid crystal was injected while keeping the liquid crystal and the substrates at a temperature not lower than N-I point. A pair of polarizer plates of neutral high polarization type (G-1220 available from Nitto Denko, Japan) were arranged in orthogonal relation with the polarization axes directed to 0° - 180° direction and 90° - 270° direction, to realize a positive display. A static voltage of 5.5 V was applied to the liquid crystal display and the measurement was performed.

As is apparent from Fig.5C, contrast ratios which are generally uniformarized and good in all the directions are obtained. There is no bad contrast ratio in particular angular range as was seen in the conventional liquid crystal display as in Fig.6A.

When the texture of the liquid crystal display was observed in polarization microscope, a multi-domain structure with fine micro domains were observed throughout the display cell. It is considered that this multi-domain is the cause of reducing the dependency on observation angle.

In short, there are multiple micro domains in the display surface, and liquid crystal molecules are distributed in all the orientation directions in the plane parallel to the substrate as a whole. In such a state, regardless of the direction of the polarization axis of the incident light, the output light has a polarization axis rotated by 90 degrees as a whole. The combination of 90 degrees polarization rotation and crossed polarizers makes display of good contrast possible. Further, angular dependency is reduced by the multi-domain structure.

In the multi-domain structure, the angle of the polarization axis of the polarizer with respect to the liquid crystal cell becomes arbitrary. In fact, when the angle of the polarizers was changed, there was observed no difference in the characteristics. Here, in the case of negative display utilizing parallel polarizers, there was a tendency of inferior black in the OFF state, possibly due to the aforementioned wavelength dependency. That is to say, positive display is more preferable.

The visual angle characteristics of Fig.5C is fairly improved compared to that of Fig.6A, but still has dependency on azimuthal angle. For example, taking the curve of CR = 10, in directions parallel to the polarization axis of the polarizers, i.e. vertical and horizontal directions, the curve reaches the polar angle of about 40 degrees, but is about 30 degrees in the azimuthal angles between these directions (i.e. 45°, 135°, 225°, 315°).

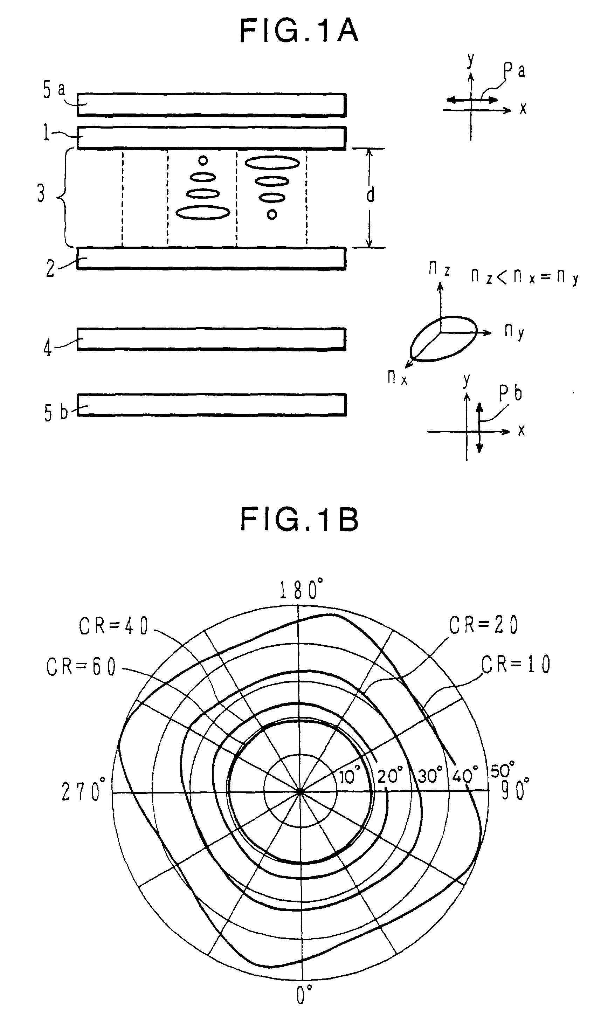

Fig.1A shows a schematic cross sectional view of a liquid crystal display cell according to an embodiment of this invention. A pair of transparent substrates 1 and 2 are similar to those of the liquid crystal display according to the above-described prior work. That is to say, the substrates have electrode structures or switch structures for applying an electric field to a liquid crystal layer, but no rubbing treatment is done thereon even if an orientation film is formed thereon.

In the figure, a liquid crystal layer 3 of chiral nematic type or nematic type is sandwiched between the pair of transparent glass substrates 1 and 2. Outside the substrates 1 and 2, a pair of linear polarizer plates 5a and 5b are disposed parallel to the substrates and to have their polarization axes Pa and Pb in a predetermined mutual angular relationship, for example, orthogonal relationship as shown in the figure.

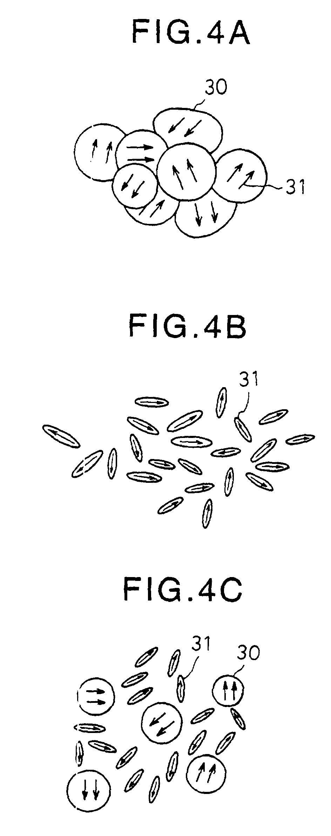

In this liquid crystal display cell, the orientation directions of the liquid crystal molecules at the interface between the liquid crystal layer and the substrates are directed uniformly to every direction when considered in the whole cell. When each micro domain is considered, the orientation directions of the liquid crystal molecules are directed along a certain direction at the interface. Fig.4A schematically shows such orientation configuration.

Liquid crystal molecules take a twisted structure varying the longitudinal direction with the distance from the interface with a chirality defined by d/p. where d represents the thickness of the liquid crystal layer, and p represents the chiral pitch of the chiral nematic or nematic liquid crystal. Here, the nematic liquid crystal is represented by p = ∞. in which the liquid crystal molecules in each micro domain are alined along the same direction regardless of the position along the thickness direction.

Orientation and twisting of liquid crystal molecules take similar configuration in each micro domain of the multi-domain structure. As shown in Fig.4A, the orientation direction differs from micro domain to micro domain. In the case of a chiral nematic liquid crystal, on the interface at the opposite substrate, a similar multi-domain structure but with every orientation direction rotated by the twist angle is produced.

It is preferable to make a liquid crystal display cell to have a chiral pitch p and a thickness d of the liquid crystal layer which satisfy a relation, 0 ≃ or < d/p < or ≃ 0.75. Here, "A ≃ or < B" means that A is approximately equal to or smaller than B. That is to say, values p and d are determined to have a polarization rotation angle, when expressed in degrees, from about 0° to about 270°.

In the case of a chiral nematic liquid crystal, values p and d are determined to satisfy, for example, 0.15 < d/p < 0.75. For example, a liquid crystal having a chiral pitch p defined by d/p = 0.25 (corresponding to 90 degrees twisting) is injected between a pair of parallel transparent glass substrates 1 and 2 separated by a gap d, and sealed.

As the liquid crystal material, for example, known nematic liquid crystals and known cholesteric liquid crystals can be used. When twisting nature is to be given, chiral agent may be added to a nematic liquid crystal. It is to be noted that the term "liquid crystal" is used to denote a material which essentially consisting of liquid crystal molecules and may contain other material.

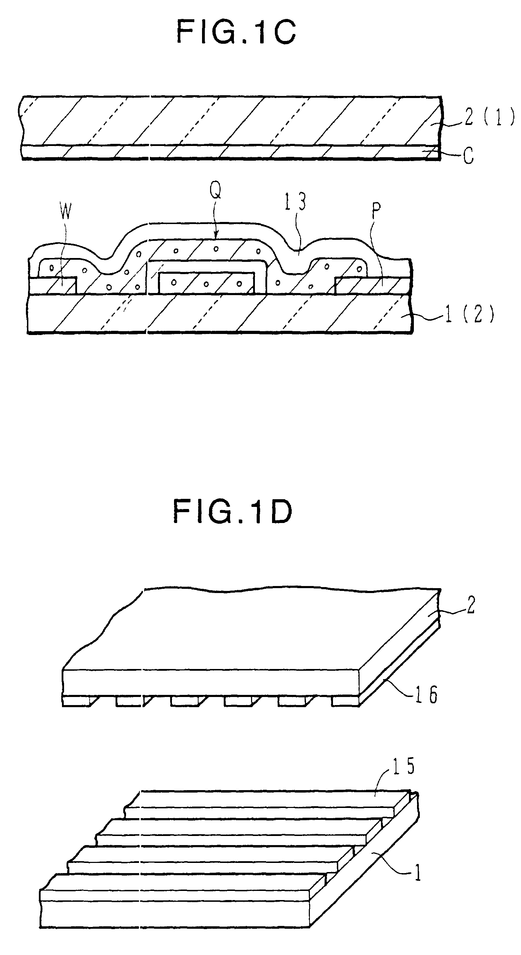

In the case of active drive system, as shown in Fig.1C, driving element Q such as a thin film transistor (TFT) using amorphous silicon or polycrystalline silicon, wiring W formed of a metal such as chromium Cr, or a doped semiconductor such as doped polycrystalline silicon, transparent pixel electrode P formed of indium-tin-oxide (ITO) etc. are formed on one glass substrates 1(2). It is preferable to further coat these surfaces with an insulating protective film 13 such as SiO₂, SiN, polyimide, etc.

Further constituents such as black stripe and color filter may also be formed. On the opposing substrate 2 (1), a common electrode C is formed on the whole surface. A similar insulating film as the film 13 may be formed thereon.

In the case of a simple matrix system, as shown in Fig.1D, parallel electrodes 15 and 16 are formed on a pair of transparent substrates 1 and 2, and arranged to cross orthogonally. Protective insulating film and/or orientation film may not necessarily be formed on the substrates 1 and 2, but may also be formed. In any case, however, rubbing is not achieved.

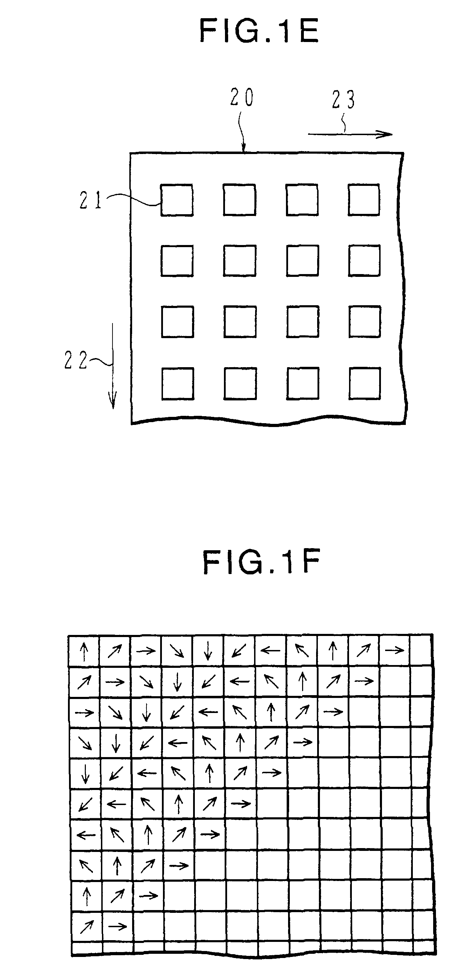

Fig.1E shows schematic appearance of an active or a simple matrix display. A matrix display 20 has a multiplicity of pixels 21 disposed in rows and columns. These pixels are defined by the transparent electrode P as shown in Fig.1C or crossed areas of the crossed electrodes 15 and 16 in Fig.1D. In these matrix display, the direction of column 22 or direction of row 23 forms a reference direction. The display is designed to present an image with the reference direction disposed horizontally.

In this embodiment, an optical compensator plate 4 having a negative optical anisotropy (birefringence) is interposed between the pair of transparent substrates 1 and 2 and the pair of polarizer plates 5a and 5b, in the shown configuration between the substrate 2 and the polarizer plate 5b. The optical compensator plate 4 has an approximately equal refractive index in the directions parallel to the plane of the plate 4, which is larger than the refractive index in the thickness direction. In the figure, the optical compensator plate 4 is interposed between one substrate 2 and one polarizer plate 5b, but it may also be interposed between the other transparent substrate 1 and the other polarizer plate 5a. Also, it is possible to divide the optical compensator plate 4 into two sheets and to dispose these two sheets inside or outside of the transparent substrates 1 and 2.

It is assumed here that one polarizer 5a has a polarization axis Pa along x direction and the other polarizer 5b has a polarization axis Pb along y direction as shown in the figure.

The optical compensator plate 4 is approximately isotropic in the in-plane directions as stated above, has a negative optical anisotropy, and has an optic axis along the thickness direction as shown in the righthand side of Fig.1A. For example, such an optical compensator plate may be made of a kind of ionomer resin which is formed, for example, by bridging ethylene-methacrylic acid copolymer with metal ions. Two sheets of stretched ionomer resin may be prepared and superposed to cross the stretching directions and heated above the melting point under pressure to form such an optical compensator plate as stated above. It is not strictly required that the resultant sheet is perfectly uniaxial, but is required that the sheet can function effectively or substantially as uniaxial.

A liquid crystal display is formed by preparing a pair of substrates 1 and 2 and sandwiching a liquid crystal layer 3 therebetween.

For example, when d/p = 0.25, a chiral nematic liquid crystal having a chiral pitch p satisfying the value d/p = 0.25 with respect to the gap d between the substrates is injected between the substrates. In each micro domain 30 as shown in Fig.4A, liquid crystal molecules will take a configuration of 90° twist between two substrates. It is noted again that in a multi-domain structure, a multiplicity of micro domains are produced and directed in every direction at the interface between the liquid crystal layer and a substrate.

Here, when injecting a liquid crystal, the temperature of the liquid crystal is preferably kept equal to or above N-I point which is the phase transition temperature between the nematic (N) phase and the isotropic (I) phase of the liquid crystal to keep the liquid crystal in the isotropic phase. After injection, the temperature of the liquid crystal cell is gradually lowered below N-I point to bring the liquid crystal material into a liquid crystal phase. This process will make the resultant liquid crystal cell better in display than injecting liquid crystal in the liquid crystal phase.

Here, it is more preferable to also keep the temperature of the substrates before injection of the liquid crystal equal to or above N-I point and to inject the liquid crystal between the substrates. Then, the temperature of the substrates may be gradually lowered below N-I point. The resultant liquid crystal cell becomes better in display by this method.

It can be expected that the liquid crystal in a cell without any orientation force will take a multi-domain structure, when considering that the liquid crystal in bulk state (a state without any external orientation force) takes a multi-domain state. Especially, it is considered that the tendency of taking a multi-domain structure becomes stronger and that the size of micro domains in a multi-domain structure becomes more uniform when liquid crystal material is injected between the substrates while keeping the temperature of the liquid crystal equal to or above N-I point.

In the case of 90° twisted liquid crystal display cell, the orientation of the polarization axes of the polarizers are orthogonal in the case of positive display and parallel in the case of negative display. In the case of 0° twisted liquid crystal display, this relation is reversed. When an electric field is applied to the liquid crystal layer 3 to orient liquid crystal molecules perpendicular to the substrates, the liquid crystal layer 3 exhibits a positive optical anisotropy having an optic axis perpendicular to the plane of substrates. The optical compensator plate 4 is selected to have retardation which is equal in absolute value and opposite in sign to that of the liquid crystal layer 3. Fig.1B shows an example of visual angle characteristics obtained in the liquid crystal display cell of Fig.1A.

A static voltage of 5.5 V was applied between the substrates. The polar angle θ from the normal to the substrate is taken radially and the azimuthal angle φ is taken along a circular periphery. Here, in the drawing, contours of equi-contrast ratio CR = 60, 40, 20, and 10 are shown by solid curves.

Compared to the characteristic of Fig.5C, it can be seen that a visual angle characteristics of more improved directional dependency was obtained.

When there is no optical compensation plate. contrast ratio is lowered for directions not parallel nor perpendicular to the polarization axes of the polarizers. By utilizing an optical compensator plate having a negative birefringence and an optic axis in the thickness direction, there is obtained such an improvement of visual angle characteristics as shown in Fig.1B.

The above description has been made on the case of utilizing one optical compensator plate having a negative uniaxial optical anisotropy. It is not very easy, however, to make an optical compensator plate having a negative uniaxial optical anisotropy.

This optical compensator plate can be replaced by a pair of optical compensator plates each having a positive uniaxial optical anisotropy with an optic axis in the plane of sheet.

Figs.2A shows a liquid crystal display according to another embodiment of this invention.

In this embodiment, a pair of optical compensator plates 4a and 4b are interposed between a pair of transparent substrates 1 and 2 and a pair of linear polarizer plates 5a and 5b. Here, in the state as shown in the figure, two optical compensator pLates 4a and 4b are both interposed between one substrate 2 and one polarizer plate 5b. The two optical compensator plates 4a and 4b can also be disposed on the both sides of the transparent substrates 1 and 2. One polarizer plate 5a has a polarization axis Pa along x direction and other polarizer plate 5b has a polarization axis Pb along y direction as shown in the figure. The pair of optical compensator plates 4a and 4b are disposed, one with an optic axis aligned at an angle of +45 degrees from x axis and the other with an optic axis aligned at an angle of -45 degrees with respect to x direction.

When an electric field is applied across the liquid crystal layer, the liquid crystal molecules are orientated along the direction of the electric field (perpendicular to the substrate). In this state, the liquid crystal layer shows a positive optical anisotropy having an optic axis perpendicular to the substrate and predetermined retardation.

The optical compensator plates 4a and 4b have each a positive optical anisotropy (birefringence) with an optic axis directed in an in-plane direction. That is to say, the refractive index is high in one direction in the plane and low in other directions.

Such optical compensator plates can be formed by utilizing materials such as ionomer resin which shows birefringence by stretching. Also, combination of stretching and heating under pressure can be combinedly employed to manufacture such an optical compensator plate. A pair of optical compensator plates having equal retardation are used. The optical compensator plates 4a and 4b are disposed as shown in Fig.2A, with the optic axis having a high refractive index in directions 45° - 225° and 135° - 315°.

The pair of polarizer plates 5a and 5b are disposed along the directions of 0° - 180° and 90° - 270°. It can be considered that the pair of optical compensator plates 4a and 4b jointly constitute an approximately negative optical anisotropy having an axis perpendicular to the substrate and a predetermined retardation. The total retardation of the optical compensator plates, and the retardation of the liquid crystal layer are selected to have approximately the same absolute value and opposite signs.

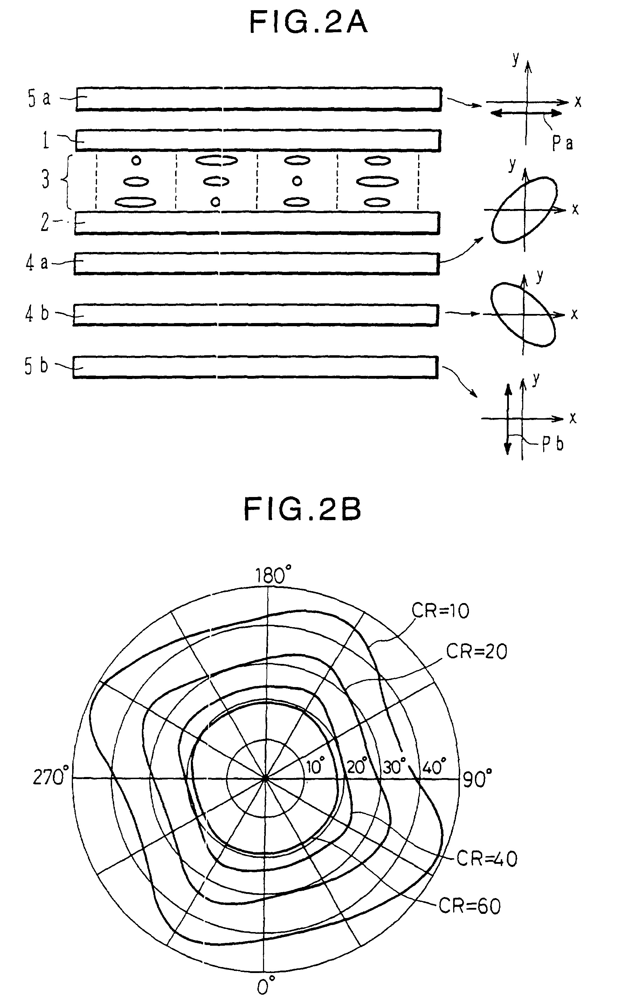

Fig.2B is a graph showing the visual angle characteristics of the liquid crystal display shown in Fig.2A. A static voltage of 5.5 V was applied between the substrates in measurement. The angle from the normal to the substrate is taken along the radial direction and the azimuthal angle is shown along the circular periphery. The characteristic of Fig.2B obtained from a structure of Fig.2A is apparently improved isotropically when compared with the characteristics of Fig.5C.

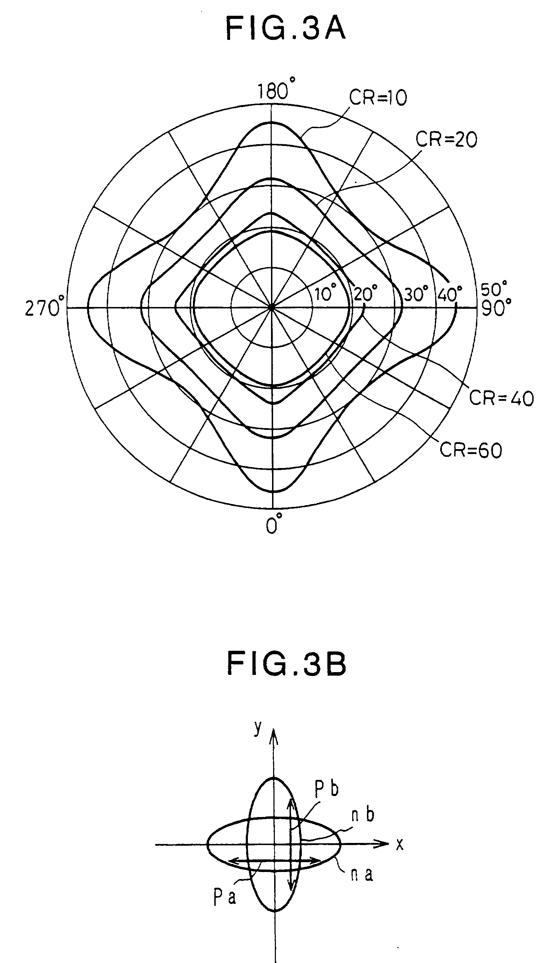

When the directions of optic axes of the pair of optical compensator plates are varied to be superposed on the direction of polarization axes of the polarizer plates as shown in Fig.3B, however, the characteristics changed as shown in Fig.3A.

In this case, the resultant visual angle characteristics is not much improved compared to the visual angle characteristics of Fig.5C and in part becomes inferior thereto.

This implies that the above-mentioned pair of compensator plates is different from one optical compensator plate of Fig.1A. In such a case, it is preferable not to superpose the directions of the optic axes of the optical compensator plates with the polarization axes of the polarizer plates, but to set these directions in complemental or alternate relationship.

When there is no optical compensator plate, the twist angle of the exit light for such an incident light having an polarization direction not parallel nor perpendicular to the polarization axis of the polarizer is determined by the polarization rotating function and the retardation of the liquid crystal layer.

When a pair of optical compensator plates having a positive birefringence and an optic axis aligned along such oblique directions are used, an improvement in the visual angle characteristics as shown in Fig.2B is obtained. When such optical compensator plates having optic axis directed along the same or perpendicular direction to the polarization axis of the polarized are used, it is considered that there is not much function of improving the directional dependency of the visual angle characteristic based on retardation. Therefore, it is preferable to set uniaxial optical compensator plates having positive birefringence oblique to the polarization axes of the polarizers.

For example, polarization axis of one of the polarizers is set horizontally or vertically and the optic axes of the compensator plates are set at angles of about ±45 degrees.

Multi-domain structures in the above embodiments can schematically be shown as in Fig.4A. Fig.4A is an enlarged plan view of the cell. A multiplicity of minute regions, i.e. micro domains 30 are formed, and liquid crystal molecules 31 in each micro domain 30 are aligned substantially parallel in a certain direction as shown by arrows. In other words, the change in the orientation direction is much larger from micro domain to micro domain than from one to another place in a same micro domain. Here, however, when the cell is seen as a whole or macroscopically, the liquid crystal molecules 31 are directed randomly at all the directions. It can be understood that the visual angle characteristics is effectively isotropic.

By varying the manufacturing conditions in various ways in the manufacturing process of a liquid crystal display cell in the afore-maintained embodiments, such orientation structures different from the multi-domain structure of Fig.4A can also be obtained.

In an alternative to the invention, for example, as shown in Fig.4B, such a structure can be formed wherein liquid crystal molecules 31 do not form particular domains, but change the orientation directions almost continuously. In the cell as a whole, the orientation directions are random and the liquid crystal molecules 31 are orientated to every direction at equal possibility.

Also, a structure which may be considered as a combination of Fig.4A and Fig.4B can be formed as shown in Fig.4C. That is to say, micro domains 30 are distributed discretely, in each of which liquid crystal molecules are orietated uniformly along one direction. Among the micro domains 30, liquid crystal molecules 31 are distributed, while varying the orientation directions continuously. In this case too, the orientation directions as a whole in the cell are random.

The above-mentioned effect of improved visual angle can be obtained with any of the structures as shown Fig.4A, 4B and 4C.

The above-described embodiments do not employ any positive orientation treatment. In recent years, however, it was found that orientation treatment is possible without performing any rubbing treatment. For example, orientation treatment of minute regions can be done by irradiating light beam on a polarization memory film.

Fig.1F shows an example of such positive orientation structure. The display surface is divided into a multiplicity of small regions. A polarization memory film is coated on a substrate and the polarization axis of exposing light is varied from region to region. Orientation structure is formed by such polarized light beam. A display cell is formed by utilizing at least one such substrate. The display cell include enough number of such small regions to exhibit orientation directions at effectively all directions at each pixel. It is necessary to include orientation directions of various directions so that each pixel can be considered to have random orientation directions by utilizing a substrate or substrates subjected to such orientation treatment. A multi-domain structure similar to those described above can be formed. Because no rubbing treatment is done, similar effects of performing no rubbing treatment can be obtained. Here, the polarization memory film can be formed by
1) silicon polyimide doped with diazo amine dye (Wayne M. Gibbons et al, NATURE Vol. 351(1991) p.49,
2) polyvinyle alcohol (PVA) doped with azo-based dye (Yasufumi Iimuya et al, 18th Liquid Crystal Conference - The Chemical Society of Japan, 64th Autumn annual meeting, p 34, September 11, 1992, or Jpn. J. Appln. Phys. Vol 32 (1993), pp L93-96),
3) photopolymerized photopolymer (Martin Schadt et al. Jpn. J. Appl. Phys. Vol. 31 (1992), pp 2155-2164), etc.

Although this invention has been described along the embodiments thereof, this invention is not limited thereto. It will be apparent for those skilled in the art that various modifications, alternations, combinations, etc. can be done within the scope of this invention as defined by the appended claims.

It should be noted that the objects and advantages of the invention may be attained by means of any compatible combination(s) particularly pointed out in the appended claims.

## Claims

1. A liquid crystal display comprising:
a pair of linear polarizers (5a, 5b) having polarization axes;
a pair of substrates (1, 2), each having no macroscopically uniform orientation direction and being disposed between said pair of polarizers;
a liquid crystal layer (3) sandwiched between said pair of substrates (1, 2) and comprising liquid crystal molecules (31) of chiral nematic or nematic liquid crystal;
the orientations of the liquid crystal molecules (31) of said liquid crystal layer being macroscopically omnidirectional with respect to directions in a plane parallel to said pair of substrates (1, 2) so that there is an equal probability of orientation of a molecule (31) in each of a plurality of directions in said plane;
said liquid crystal molecules providing a multiplicity of continuous micro-domains (30) extending from one substrate (1, 2) to the other substrate (2, 1);
the liquid crystal molecules in each of the micro-domains (30) being directed to a certain direction and, in the case of a chiral nematic liquid crystal, having the same twist angle and, in the case of a nematic liquid crystal, having no twist angle;
**characterised in that** the display further comprises
an optical compensation member (4) disposed between one of said substrates (1, 2) and one of said polarizers, and having a substantially uniaxial birefringence and an optic axis directed substantially perpendicular to said substrates (1, 2); the refractive index in the directions orthogonal to the optic axis being larger than parallel to the optic axis.

2. A liquid crystal display according to claim 1, wherein said polarization axes of the pair of polarizers (5a, 5b) are mutually orthogonal or parallel.

3. A liquid crystal display according to claim 2, wherein said optical compensation member comprises a pair of optical compensation plates disposed between said pair of substrates and said pair of polarizers.

4. A liquid crystal display according to claim 1, wherein said liquid crystal layer (3) has a multiplicity of micro domains (30) with respect to directions in the plane of the substrate (1, 2), and includes in each micro domain (30) liquid crystal molecules (31) of aligned orientation direction in a plane parallel to the substrates (1, 2).

5. A liquid crystal display according to claim 4, wherein said liquid crystal layer (3) further includes regions among micro domains (30), in which regions the orientation direction of liquid crystal molecules (31) varies continuously.

6. A liquid crystal display according to claim 1, wherein on at least one of the substrates a positive orientation structure is formed of a polarization memory film which has orientation directions distributed to effectively all the directions in the plane parallel to the substrate at an equal possibility macroscopically.

7. A liquid crystal display according to claim 1, wherein the liquid crystal layer (3) comprises a chiral nematic liquid crystal with a chiral pitch p, and a thickness d along a thickness direction which is sandwiched by said transparent substrates (1, 2), and said p and d are selected to satisfy
d/p < or ≃ 0.75.

8. A liquid crystal display according to claim 7, wherein said liquid crystal layer (3) comprises chiral nematic liquid crystal and said gap d and said chiral pitch p of the chiral nematic liquid crystal satisfy
0.15 < d/p < 0.75.

9. A liquid crystal display comprising:
a pair of linear polarizers (5a, 5b) having mutually orthogonal or parallel polarization axes;
a pair of substrates (1, 2), each having no macroscopically uniform orientation direction and being disposed between said pair of polarizers,
a liquid crystal layer (3) sandwiched between said pair of substrates (1, 2) and comprising liquid crystal molecules (31) of chiral nematic or nematic liquid crystal;
the orientations of the liquid crystal molecules (31) of said liquid crystal layer being macroscopically omnidirectional with respect to directions in a plane parallel to said pair of substrates (1, 2) so that there is an equal probability of orientation of a molecule (31) in each of a plurality of directions in said plane;
said liquid crystal molecules providing a multiplicity of continuous micro-domains (30) extending from one substrate (1, 2) to the other substrate (2, 1);
the liquid crystal molecules in each of the micro-domains (30) being directed to a certain direction and, in the case of a chiral nematic liquid crystal, having the same twist angle and, in the case of a nematic liquid crystal, having no twist angle;
**characterized in that** the display further comprises
a pair of optical compensation plates (4a, 4b) disposed between one of said substrates (1, 2) and one of said polarizers (5a, 5b), each of said optical compensation plates (4a, 4b) having a substantially uniaxial optical birefringence with an optic axis in the plane of the plate, the optic axes of the pair of compensation plates (4a, 4b) being disposed mutually orthogonal and oblique to the polarization axes of the polarizers (5a, 5b); the refractive index of each of said pair of compensation plates (4a, 4b) in the directions orthogonal to the optic axis being smaller than parallel to the optic axis.

10. A liquid crystal display according to claim 9, wherein said pair of optical compensation plates (4a, 4b) have substantially equal retardation.

11. A method of manufacturing a liquid crystal display comprising the steps of:
preparing an optical compensation member (4) having an effectively uniaxial birefringence with an optic axis directed along a thickness direction with the refractive index in the directions orthogonal to the optic axis being larger than parallel to the optic axis, a pair of linear polarizers (5a, 5b), a pair of transparent substrates (1, 2) having no macroscopically uniform orientation direction, and a chiral nematic or nematic liquid crystal;
injecting said chiral nematic or nematic liquid crystal between said pair of transparent, substrates (1, 2) to form a liquid crystal cell; the liquid crystal moleculs providing a multiplicity of micro-domains (30) extending from one substrate to the other substrate;
the orientations of the liquid crystal molecules (31) of said liquid crystal cell being macroscopically omnidirectional with respect to directions in a plane parallel to said pair of substrates (1, 2) so that there is an equal probability of orientation of a molecule (31) in each of a plurality of directions in said plane;
and the liquid crystal molecules in each of the micro-domains (30) being directed to a certain direction and, in the case of chiral nematic liquid crystal, having the same twist angle and, in the case of a nematic liquid crystal, having no twist angle;
disposing said optical compensation member (4) and said transparent substrates (1, 2) parallelly and between one of the substrates and one of the polarizers; and
disposing said pair of polarizers (5a, 5b) parallelly to and outside said optical compensation member (4) and said pair of transparent substrates (1, 2).

12. A method of manufacturing a liquid crystal display according to claim 11, wherein said step of injecting the liquid crystal between the pair of transparent substrates (1, 2) is achieved while keeping the temperature of the liquid crystal at least equal to N-I point of said liquid crystal.

13. A method of manufacturing a liquid crystal display according to claim 12, wherein said step of injecting the liquid crystal between said pair of transparent substrate (1, 2) is achieved, while keeping the temperature of said transparent substrates (1, 2) at least equal to N-I point of said liquid crystal.

## Patentansprüche

1. Eine Flüssigkristallanzeige, die folgendes aufweist:
ein Paar linearer Polarisierer (5a, 5b) mit Polarisationsachsen;
ein Paar von Substraten (1, 2), von denen jedes keine makroskopisch
einförmige Orientierungsrichtung besitzt und zwischen dem Paar von Polarisierern angeordnet ist;
eine Flüssigkristallschicht (3), die zwischen dem Paar von Substraten (1, 2) sandwichmäßig gelegen ist und Flüssigkristallmoleküle (31) eines chiral-nematischen oder eines nematischen Flüssigkristalls aufweist;
wobei die Orientierungen der Flüssigkristallmoleküle (31) der Flüssigkristallschicht makroskopisch omnidirektional sind in Bezug auf Richtungen in einer Ebene, die parallel zu dem Paar von Substraten (1, 2) ist, so daß es eine gleiche Wahrscheinlichkeit für die Orientierung eines Moleküls (31) in jeder der Vielzahl von Richtungen in der Ebene gibt;
wobei die Flüssigkristallmoleküle eine Vielzahl von kontinuierlichen Mikrodomänen (30) vorsehen, die sich von einem Substrat (1, 2) zu dem anderen Substrat (2, 1) erstrecken; wobei die Flüssigkristallmoleküle in jeder der Mikrodomänen (30) in eine bestimmte Richtung gerichtet sind und, im Falle eines chiral-nematischen Flüssigkristalls, den gleichen Verdrehungs- bzw. Twistwinkel haben und, im Falle eines nematischen Flüssigkristalls, keinen Verdrehungs- bzw. Twistwinkel haben;
**dadurch gekennzeichnet, daß** die Anzeige weiter folgendes aufweist:
ein optisches Kompensationsglied (4), das zwischen einem der Substrate (1, 2) und einem der Polarisierer angeordnet ist und eine im wesentlichen einachsige Doppelbrechung und eine optische Achse besitzt, die im wesentlichen senkrecht zu den Substraten (1, 2) gerichtet ist;
wobei der Brechungsindex in den Richtungen rechtwinklig bzw. senkrecht zu der optischen Achse größer ist als parallel zu der optischen Achse.

2. Eine Flüssigkristallanzeige nach Anspruch 1, wobei die Polarisationsachsen des Paares von Polarisierern (5a, 5b) gegenseitig senkrecht oder parallel sind.

3. Eine Flüssigkristallanzeige nach Anspruch 2, wobei das optische Kompensationsglied ein Paar optischer Kompensationsplatten aufweist, die zwischen dem Paar von Substraten und dem Paar von Polarisierern angeordnet sind.

4. Eine Flüssigkristallanzeige nach Anspruch 1, wobei die Flüssigkristallschicht (3) eine Vielzahl von Mikrodomänen (30) in Bezug auf die Richtungen in der Ebene der Substrate (1, 2) besitzt, und in jeder Mikrodomäne (30) Flüssigkristallmoleküle (31) umfaßt, mit einer ausgerichteten Orientierungsrichtung in einer Ebene parallel zu den Substraten (1, 2).

5. Eine Flüssigkristallanzeige nach Anspruch 4, wobei die Flüssigkristallschicht (3) weiter Bereiche unter Mikrodomänen (30) umfaßt, in welchen Bereichen die Orientierungsrichtung von Flüssigkristallmolekülen (31) kontinuierlich variiert.

6. Eine Flüssigkristallanzeige nach Anspruch 1, wobei auf zumindest einem der Substrate eine positive Orientierungsstruktur aus einem Polarisationsspeicherfilm gebildet wird, der Orientierungsrichtungen besitzt, die in effektiv alle Richtungen in der Ebene parallel zu den Substraten mit einer gleichen Wahrscheinlichkeit makroskopisch verteilt sind.

7. Eine Flüssigkristallanzeige nach Anspruch 1, wobei die Flüssigkristallschicht (3) chiral-nematischen Flüssigkristall mit einer chirale Steigung (pitch) p aufweist, und eine Dicke d entlang einer Dickenrichtung, die von den transparenten Substraten (1, 2) sandwichmäßig umfaßt wird, und wobei p und d ausgewählt sind, um
d/p < oder ≃ 0,75
zu genügen.

8. Eine Flüssigkristallanzeige nach Anspruch 7, wobei die Flüssigkristallschicht (3) chiral-nematischen Flüssigkristall aufweist, und wobei der Spalt d und die chirale Steigung (pitch) p des chiral-nematischen Flüssigkristalls
0,15 < d/p < 0,75
genügen.

9. Eine Flüssigkristallanzeige, die folgendes aufweist:
ein Paar linearer Polarisierer (5a, 5b) mit gegenseitig orthogonalen oder parallelen Polarisationsachsen;
ein Paar von Substraten (1, 2), von denen jedes keine makroskopisch einförmige Orientierungsrichtung besitzt und zwischen dem Paar von Polarisierern angeordnet ist;
eine Flüssigkristallschicht (3), die zwischen dem Paar von Substraten (1, 2) sandwichmäßig umfaßt ist und Flüssigkristallmoleküle (31) eines chiral-nematischen oder nematischen Flüssigkristalls aufweist;
wobei die Orientierungen der Flüssigkristallmoleküle (31) der Flüssigkristallschicht makroskopisch omnidirektional sind in Bezug auf die Richtungen in einer Ebene parallel zu dem Paar von Substraten (1, 2), so daß es eine gleiche Wahrscheinlichkeit für die Orientierung eines Moleküls (31) in jeder der Vielzahl von Richtungen in der Ebene gibt;
wobei die Flüssigkristallmoleküle eine Vielzahl von kontinuierlichen Mikrodomänen (30) vorsehen, die sich von einem Substrat (1, 2) zu dem anderen Substrat (2, 1) erstrecken;
wobei die Flüssigkristallmoleküle in jeder der Mikrodomänen (30) in eine bestimmte Richtung gerichtet sind und, im Falle eines chiral-nematischen Flüssigkristalls, den gleichen Verdrehungs- bzw. Twistwinkel haben, und, im Falle eines nematischen Flüssigkristalls, keinen Verdrehungs- bzw. Twistwinkel haben;
**dadurch gekennzeichnet, daß** die Anzeige weiter folgendes aufweist:
ein Paar optischer Kompensationsplatten (4a, 4b), die zwischen einem der Substrate (1, 2) und einem der Polarisierer (5a, 5b) angeordnet sind, wobei jede der optischen Kompensationsplatten (4a, 4b) eine im wesentlichen einachsige optische Doppelbrechung mit einer optischen Achse in der Ebene der Platte besitzt, wobei die optischen Achsen des Paares von Kompensationsplatten (4a, 4b) gegenseitig senkrecht und schräg zu den Polarisationsachsen der Polarisierer (5a, 5b) angeordnet sind;
wobei der Brechungsindex jeder des Paares von Kompensationsplatten (4a, 4b) in den Richtungen senkrecht zu der optischen Achse kleiner ist als parallel zu der optischen Achse.

10. Eine Flüssigkristallanzeige nach Anspruch 9, wobei das Paar von optischen Kompensationsplatten (4a, 4b) eine im wesentlichen gleiche Verzögerung hat.

11. Ein Verfahren zum Herstellen einer Flüssigkristallanzeige, das die folgenden Schritte aufweist:
Vorbereiten eines optischen Kompensationsglieds (4) mit einer effektiv einachsigen Doppelbrechung mit einer optischen Achse, die entlang einer Dickenrichtung gerichtet ist, wobei der Brechungsindex in den Richtungen senkrecht zu der optischen Achse größer ist als parallel zu der optischen Achse, eines Paares von linearen Polarisierern (5a, 5b), eines Paares von transparenten Substraten (1, 2), die keine makroskopisch einförmige Orientierungsrichtung haben, und eines chiral-nematischen oder nematischen Flüssigkristalls;
Injizieren des chiral-nematischen oder nematischen Flüssigkristalls zwischen das Paar von transparenten Substraten (1, 2), um eine Flüssigkristallzelle zu bilden; wobei die Flüssigkristallmoleküle eine Vielzahl von Mikrodomänen (30) vorsehen, die sich von einem Substrat zu dem anderen Substrat erstrecken;
wobei die Orientierungen der Flüssigkristallmoleküle (31) der Flüssigkristallzelle makroskopisch omnidirektional sind in Bezug auf die Richtungen in einer Ebene parallel zu dem Paar von Substraten (1, 2), so daß es eine gleiche Wahrscheinlichkeit für die Orientierung eines Moleküls (31) in jeder der Vielzahl von Richtungen in der Ebene gibt;
und wobei die Flüssigkristallmoleküle in jeder der Mikrodomänen (30) in eine bestimmte Richtung gerichtet sind und, im Falle eines chiral-nematischen Flüssigkristalls, den gleichen Verdrehungs- bzw. Twistwinkel haben und, im Falle eines nematischen Flüssigkristalls, keinen Verdrehungs- bzw. Twistwinkel haben;
Anordnen der optischen Kompensationsglieder (4) und der transparenten Substrate (1, 2) parallel und zwischen einem der Substrate und einem der Polarisierer; und
Anordnen des Paares von Polarisierern (5a, 5b) parallel zu und außerhalb des optischen Kompensationsglieds (4) und des Paares von transparenten Substraten (1, 2).

12. Ein Verfahren zum Herstellen einer Flüssigkristallanzeige nach Anspruch 11, wobei der Schritt des Injizierens des Flüssigkristalls zwischen das Paar von transparenten Substraten (1, 2) erzielt wird, während die Temperatur des Flüssigkristalls zumindest gleich einem N-I-Punkt des Flüssigkristalls gehalten wird.

13. Ein Verfahren zum Herstellen einer Flüssigkristallanzeige nach Anspruch 12, wobei der Schritt des Injizierens des Flüssigkristalls zwischen das Paar von transparenten Substraten (1, 2) erzielt wird, während die Temperatur der transparenten Substrate (1, 2) zumindest gleich einem N-I-Punkt des Flüssigkristalls gehalten wird.

## Revendications

1. Affichage à cristaux liquides comprenant :
deux polariseurs rectilignes (5a, 5b) ayant des axes de polarisation ;
deux substrats (1, 2) ayant chacun une orientation non uniforme macroscopiquement et étant disposés entre les deux polariseurs ;
une couche de cristaux liquides (3) prise en sandwich entre les deux substrats (1, 2) et comprenant des molécules de cristaux liquides (31) de cristaux liquides nématiques chiraux ou nématiques ;
les orientations des molécules de cristaux liquides (31) de la couche de cristaux liquides étant macroscopiquement omnidirectionnelles par rapport aux directions dans un plan parallèle aux deux substrats (1, 2) de sorte qu'il y a une même probabilité d'orientation d'une molécule (31) dans chacune des diverses directions du plan ;
les molécules de cristaux liquides constituant une multiplicité de micro-domaines continus (30), les molécules de cristaux liquides dans chacun des micro-domaines (30) étant dirigées dans une certaine direction et, dans le cas de cristaux liquides nématiques chiraux, ayant le même angle de torsion et, dans le cas d'un cristal liquide nématique, n'ayant pas d'angle de torsion ;
**caractérisé en ce que** l'affichage comprend en outre :
un élément optique de compensation (4) disposé entre l'un des deux substrats (1, 2) et l'un des polariseurs, et ayant une biréfringence sensiblement uniaxe et un axe optique dirigé sensiblement perpendiculairement aux substrats (1, 2), l'indice de réfraction dans les directions orthogonales à l'axe optique étant plus grand que dans la direction parallèle à l'axe optique.

2. Affichage à cristaux liquides selon la revendication 1, dans lequel les axes de polarisation des deux polariseurs (5a, 5b) sont mutuellement orthogonaux ou parallèles.

3. Affichage à cristaux liquides selon la revendication 2, dans lequel l'élément de compensation optique comprend deux plaques de compensation optique disposées entre les deux substrats et les deux polariseurs.

4. Affichage à cristaux liquides selon la revendication 1, dans lequel la couche de cristaux liquides (3) comprend un grand nombre de micro-domaines (30) par rapport aux directions dans le plan du substrat (1, 2) et comprend dans chaque micro-domaine (30) des molécules de cristaux liquides (31) d'orientation alignée dans un plan parallèle aux substrats (1, 2).

5. Affichage à cristaux liquides selon la revendication 4, dans lequel la couche de cristaux liquides (3) comprend en outre des régions parmi les micro-domaines (30), dans lesquelles la direction d'orientation des molécules de cristaux liquides (31) varie continûment.

6. Affichage à cristaux liquides selon la revendication 1, dans lequel, sur au moins un des substrats, est formée une structure à orientation positive d'une couche de mémoire de polarisation qui a des directions d'orientation réparties selon effectivement toutes les directions dans le plan parallèle au substrat avec une même probabilité à l'échelle macroscopique.

7. Affichage à cristaux liquides selon la revendication 1, dans. lequel la couche de cristaux liquides (3) comprend des cristaux liquides nématiques chiraux avec un pas chiral (p) et une épaisseur (d) dans le sens de l'épaisseur, qui sont pris en sandwich entre les substrats transparents (1, 2) et où p et d sont choisis pour satisfaire à :
d/p ≤ 0,75

8. Affichage à cristaux liquides selon la revendication 7, dans lequel la couche de cristaux liquides (3) comprend des cristaux liquides nématiques chiraux et dans lequel l'intervalle d et le pas chiral p des cristaux liquides nématiques chiraux satisfont à la relation :
0,15 < d/p < 0,75.

9. Affichage à cristaux liquides comprenant :
deux polariseurs rectilignes (5a, 5b) ayant des axes de polarisation mutuellement orthogonaux ou parallèles ;
deux substrats (1, 2) ayant chacun une orientation non-uniforme macroscopiquement et étant disposés entre les deux polariseurs ;
une couche de cristaux liquides (3) prise en sandwich entre les deux substrats (1, 2) et comprenant des molécules de cristaux liquides (31) de cristaux liquides nématiques chiraux ou nématiques ;
les orientations des molécules de cristaux liquides (31) de la couche de cristaux liquides étant macroscopiquement omnidirectionnelles par rapport aux directions dans un plan parallèle aux deux substrats (1, 2) de sorte qu'il y a une même probabilité d'orientation d'une molécule (31) dans l'une quelconque des directions du plan ;
les molécules de cristaux liquides constituant plusieurs micro-domaines continus (30) s'étendant à partir d'un substrat (1, 2) vers l'autre substrat (2, 1), les molécules de cristaux liquides dans chacun des micro-domaines (30) étant dirigées dans une certaine direction et, dans le cas de cristaux liquides nématiques chiraux, ayant le même angle de torsion et, dans le cas de cristaux liquides nématiques, n'ayant pas d'angle de torsion ;
**caractérisé en ce que** l'affichage comprend en outre :
deux plaques de compensation optique (4a, 4b) disposées entre l'un des substrats (1, 2) et l'un des polariseurs (5a, 5b), chacune des plaques de compensation optique (4a, 4b) ayant une biréfringence optique sensiblement uniaxe, dont l'axe optique est situé dans le plan de la plaque, les axes optiques des deux plaques de compensation (4a, 4b) étant disposés mutuellement orthogonalement ou de façon oblique par rapport aux axes de polarisation des polariseurs (5a, 5b), l'indice de réfraction de chacune des deux plaques de compensation (4a, 4b) dans les directions orthogonales à l'axe optique étant inférieur à cet indice parallèlement à l'axe optique.

10. Affichage à cristaux liquides selon la revendication 9, dans lequel les deux plaques de compensation optique (4a, 4b) présentent des retards sensiblement égaux.

11. Procédé de fabrication d'un affichage à cristaux liquides comprenant les étapes suivantes :
préparer un élément de compensation optique (4) ayant une biréfringence effectivement uniaxe d'axe optique dirigé selon l'épaisseur, l'indice de réfraction dans les directions orthogonales de l'axe optique étant plus grand que parallèlement à l'axe optique, deux polariseurs (5a, 5b), deux substrats transparents (1, 2) ayant une orientation macroscopiquement non uniforme, et des cristaux liquides nématiques chiraux ou nématiques ;
injecter les cristaux liquides nématiques chiraux ou nématiques entre les deux substrats transparents (1, 2) pour former une cellule à cristaux liquides, les molécules de cristaux liquides assurant que les orientations des molécules de cristaux liquides (31) de la cellule de cristaux liquide sont macroscopiquement omnidirectionnelles par rapport aux directions dans un plan parallèle aux deux substrats (1, 2) de sorte qu'il y a une même probabilité d'orientation d'une molécule (31) dans chacune des diverses directions du plan ; et
les molécules de cristaux liquides dans chacun des micro-domaines (30) étant dirigées vers une certaine direction et, dans le cas de cristaux liquides nématiques chiraux ayant le même angle de torsion et dans le cas des cristaux liquides nématiques n'ayant pas d'angle de torsion ;
disposer l'élément de compensation optique (4) et les substrats transparents (1, 2) parallèlement et entre l'un des substrats et l'un des polariseurs ; et
disposer les deux polariseurs (5a, 5b) parallèlement à un élément de compensation optique (4) et aux deux substrats transparents (1, 2), et vers l'extérieur.

12. Procédé de fabrication d'un affichage à cristaux liquides selon la revendication 11, dans lequel l'étape d'injection des cristaux liquides entre les deux substrats transparents (1, 2) est réalisée en maintenant la température des cristaux liquides au moins égale au point N-I des cristaux liquides.

13. Procédé de fabrication d'un affichage à cristaux liquides selon la revendication 12, dans lequel l'étape d'injection des cristaux liquides entre les deux substrats transparents (1, 2) est réalisée en maintenant la température des substrats transparents (1, 2) au moins égale au point N-I des cristaux liquides.
